# EUROPÄISCHE PATENTANMELDUNG

(11) **EP 0 565 050 A1**
(43) Veröffentlichungstag der Anmeldung: **13.10.1993**
(21) Anmeldenummer: 93105679.0
(22) Anmeldetag: 06.04.1993
(51) Int. Cl.: B23Q 1/14

(54) **Fräskopf**

(30) Priorität: 07.04.1992 DE 9204823 U
(71) Anmelder: DECKEL MAHO GmbH, D-87459 Pfronten (DE)
(72) Erfinder: Babel, Werner, W-8962 Pfronten (DE)
(74) Vertreter: Patentanwälte Beetz - Timpe - Siegfried Schmitt-Fumian - Mayr

(57) **Zusammenfassung**

Gegenstand der Erfindung ist ein Fräskopf für eine Werkzeugmaschine, der ein Gehäuse und eine darin axial verschiebbar gelagerte Arbeitsspindel aufweist und der an der Stirnseite eines horizontal ausgerichteten Spindelstocks um eine horizontale Drehachse verschwenkbar montiert ist. Zur mehrachsigen Bearbeitung eines aufgespannten Werkstücks ist das Fräskopf-Gehäuse (13) über einen winkelförmigen Träger (9) am Spindelstock (5) um die Drehachse (16) derart montiert, daß das untere Ende des eingespannten Werkzeugs (15) in der Drehachse liegt.

## Beschreibung

Die Erfindung betrifft einen Fräskopf für eine Werkzeugmaschine, der ein Gehäuse und eine darin axial verschiebbar gelagerte Arbeitsspindel aufweist und der an der Stirnseite eines horizontal verfahrbaren Spindelstocks um eine horizontale Drehachse verschwenkbar montiert wird.

Bekanntlich bereitet die genaue spanende Bearbeitung von Kanten und Ecken eines Werkstücks erhebliche Schwierigkeiten, weil die verschiedenen angetriebenen Maschinenteile gemeinsam komplizierte Bewegungen ausführen müssen, damit der wirksame Bereich des eingespannten Werkzeugs auf einem ausreichend kleinen Bogenradius um diese Ecken bzw. Kanten bewegt werden kann.

Aufgabe der Erfindung ist es, einen Fräskopf der oben genannten Art zu schaffen, mit dem auch Kanten und andere kritische Abschnitte am Werkstück auf einfache Weise genau bearbeitet werden können.

Diese Aufgabe wird erfindungsgemäß dadurch gelöst, daß das Fräskopfgehäuse über einen winkelförmigen Träger derart am Spindelstock montiert ist, daß das untere Ende des eingespannten Werkzeugs sich in jeder Winkellage des Fräskopfs in der Drehachse befindet.

Durch die erfindungsgemäße Halterung des Fräskopfs mittels des winkelförmigen Trägers wird erreicht, daß bei einer Verdrehung des im Spindelstock gelagerten Drehglieds der gesamte Fräskopf eine Umlaufbewegung um die Drehachse ausführt, wobei die wirksame Arbeits-Stirnfläche des Werkzeugs in der Drehachse zentriert bleibt und in dieser schwenkt.

Gemäß einer zweckmäßigen Ausgestaltung der Erfindung ist der winkelförmige formsteife Träger einstückig ausgebildet und weist einen am motorisch antreibbaren Drehglied des Spindelstocks befestigten unteren Abschnitt sowie einen im rechten Winkel zum verlaufenden oberen Abschnitt auf, an dem das Fräskopf-Gehäuse quer befestigt ist.

Bei einer anderen zweckmäßigen Ausgestaltung der Erfindung besteht der Träger aus zwei Teilen, wobei ein erster am Drehglied des Spindelstocks befestigter Schwenkteil eine Führung für den abgewinkelten zweiten Teil darstellt. Durch diese Ausbildung des winkelförmigen Trägers ergibt sich die Möglichkeit, unterschiedliche Werkzeuglängen - zusätzlich zu der axialen Zustellung der Arbeitsspindel - während oder vor einem Arbeitsvorgang auf die Drehachse genau auszurichten.

Die horizontalen Abschnitte des Winkelträgers sind ausreichend lang und formsteif gewählt, um einen genügend großen Arbeitsbereich zu erzielen.

Weitere Besonderheiten und Vorzüge der Erfindung ergeben sich aus der folgenden Beschreibung von Ausführungsbeispielen anhand der Zeichnung. Es zeigen:
- Fig. 1: eine Werkzeugmaschine mit an einem Spindelstock montiertem vertikalen Fräskopf in schematischer Seitenansicht;
und
- Fig. 2: einen Fräskopf mit einem zweiteiligen Winkelträger.

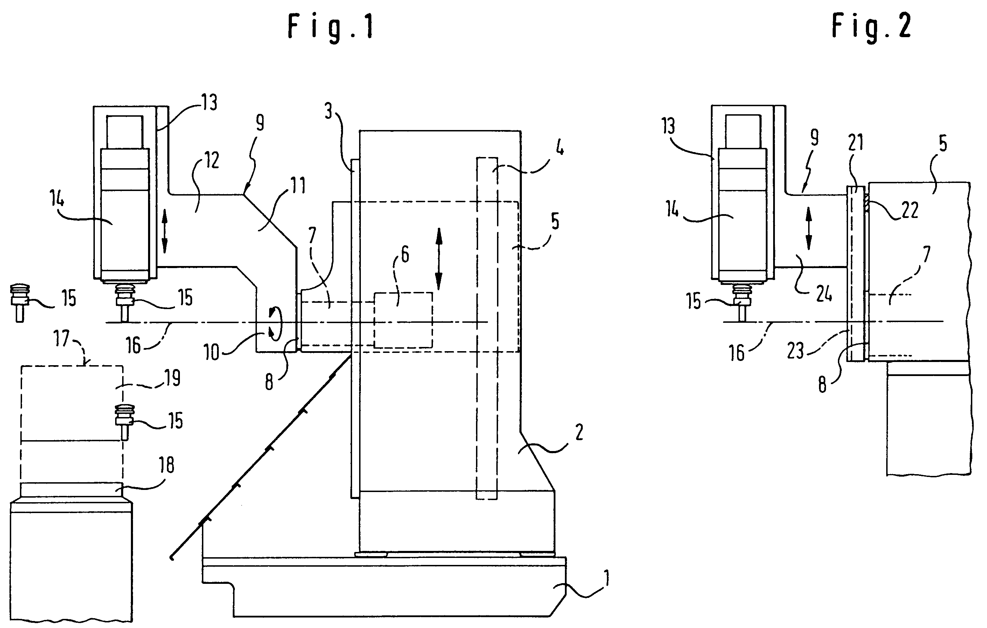

Die in Fig. 1 dargestellte Werkzeugmaschine enthält einen auf einem Bett 1 horizontal verfahrbaren Ständer 2, an dessen Vertikalführungen 3, 4 ein Spindelstock 5 in der Z-Achse motorisch verschiebbar geführt ist. Im Spindelstock 5 ist ein Antriebsaggregat 6 angeordnet, das über ein Getriebe 7 o.dgl. ein Drehglied 8 an der Stirnseite des Spindelkopfs 5 antreibt. An diesem Drehglied 8 ist ein abgewinkelter Träger 9 montiert, der aus einem unteren vertikalen Abschnitt 10, einem schrägen Zwischenabschnitt 11 und einem horizontalen oberen Abschnitt 12 besteht. An diesem oberen horizontalen Abschnitt 12 des Winkelträgers 9 ist das Gehäuse 13 einer vertikalen Spindel 14 befestigt, die in Richtung des Pfeils 15 mittels nicht dargestellter Antriebsmittel axial verschiebbar im Gehäuse 13 gelagert ist. Die gesamte Anordnung, insbesondere die Länge der jeweiligen Abschnitte 10, 11, 12 des Winkelträgers 9 sind so gewählt, daß ein in die Arbeitsspindel 14 eingespanntes Werkzeug 15 mit seinem unteren Ende genau auf die Drehachse 16 des Drehglieds 8 zentriert ist, so daß durch die Verdrehung dieses Drehglieds 8 um die Achse 16 der Winkelträger 9 und mit diesem die Arbeitsspindel 14 eine Umlaufbewegung um diese Achse 16 ausführt, wobei in jedem Stadium die untere Arbeitsfläche des Fräsers 15 in dieser Achse 16 verbleibt. Durch eine solche Bewegung können die Längskanten 17 eines auf einem Werkstücktisch 18 aufgespannten Werkstücks 19 sehr genau bearbeitet werden, wobei für einen solchen Bearbeitungsvorgang lediglich eine Verdrehung des Winkelträgers 9 mit Hilfe des z.B. als Schrittmotor ausgebildeten Antriebsmotors 6 erforderlich ist. Durch Verwendung eines herkömmlichen Drehtisches als Werkstückträger können unterschiedliche Kanten und Ecken des Werkstücks 19 auf diese Weise bearbeitet werden.

Die Ausführung nach Fig. 2 entspricht in ihrem wesentlichen Aufbau derjenigen nach Fig. 1, wobei jedoch hier der Fräskopf an einem horizontal auf dem Ständer 2 verfahrbaren Spindelstock 5 montiert ist. Bei dieser Ausführung besteht der Winkelträger 9 aus einer an der Stirnseite des Spindelstocks 5 angeordneten Platte 21, die mit ihrem unteren Abschnitt am Drehglied 8 fest montiert ist und in ihrem oberen Teil in einer kreisbogenförmigen Schiene 22 an der Stirn des Spindelstocks 5 geführt ist. Die Platte 21 weist an ihrer Vorderseite Führungen 23 auf, in denen ein zweiter Teil 24 des Winkelträgers 9 in Richtung des Pfeils geführt ist. Auf diese Weise kann der Stirnfräser 15 in der Arbeitsspindel 14 genau auf die Drehachse 16 eingestellt werden, ohne daß die Spindel 14 im Gehäuse 13 axial verschoben werden müßte.

Die Erfindung ist nicht auf die dargestellten Ausführungsbeispiele beschränkt. So kann beispielsweise auch der Winkelträger 9 gemäß Fig. 1 über eine kreisbogenförmige Schiene 22 zusätzlich an der Stirnseite eines entsprechend ausgebildeten Spindelstocks 5 geführt werden, um die Stabilität zu erhöhen und dem Entstehen von Vibrationen entgegenzuwirken.

## Patentansprüche

1. Fräskopf für eine Werkzeugmaschine, der ein Gehäuse und eine darin axial verschiebbar gelagerte Arbeitspindel aufweist und der an der Stirnseite eines horizontal ausgerichteten Spindelstocks um eine horizontale Drehachse verschwenkbar montiert ist,
**dadurch gekennzeichnet,**
daß das Fräskopf-Gehäuse (13) über einen winkelförmigen Träger (9) am Spindelstock (5) um die Drehachse (16) derart montiert ist, daß das untere Ende des eingespannten Werkzeugs (15) in der Drehachse liegt.

2. Fräskopf nach Anspruch 1,
dadurch gekennzeichnet,
daß der winkelförmige Träger (9) einstückig ausgebildet ist und einen ersten mit einem Drehglied (8) verbundenen vertikalen Abschnitt (10), einen zweiten schrägen Abschnitt (11) und einen horizontalen Endabschnitt (12) aufweist, an dessen Ende das Gehäuse (13) der Arbeitsspindel befestigt ist.

3. Fräskopf nach Anspruch 1,
dadurch gekennzeichnet,
daß an dem im Spindelstock (5) motorisch verdrehbaren Drehglied (8) ein plattenförmiger Teil (21) des Winkelträgers (9) montiert und über eine Führungsschiene (22) geführt ist
und
daß ein zweiter Teil (24) des Winkelträgers (9) in Führungen (23) des plattenförmigen Teils (21) verschiebbar gehalten ist.
